# EUROPÄISCHE PATENTSCHRIFT

(11) **EP 0 417 384 B1**
(45) Veröffentlichungstag und Bekanntmachung des Hinweises auf die Patenterteilung: **24.01.1996**
(21) Anmeldenummer: 90106995.5
(22) Anmeldetag: 11.04.1990
(51) Int. Cl.: G02B 6/44

(54) **Optisches Kabel**
Optical cable
Câble optique

(30) Priorität: 11.08.1989 DE 3926593
(43) Veröffentlichungstag der Anmeldung: 20.03.1991
(73) Patentinhaber: KABEL RHEYDT Aktiengesellschaft, D-41179 Mönchengladbach (DE)
(72) Erfinder: Zamzow, Peter, D-4630 Bochum 1 (DE); Gregor, Paul, D-4200 Oberhausen 11 (DE); Delâge, Peter, D-4053 Jüchen 5 (DE)
(74) Vertreter: Mende, Eberhard, Dipl.-Ing.

(56) Entgegenhaltungen:
- GB-A- 2 105 865
- GB-A- 2 181 090
- GB-A- 2 184 563
- US-A- 4 695 128
- PATENT ABSTRACTS OF JAPAN, vol. 9, no. 195 (P-379)(1918) 13 August 1985 & JP A 60061708

## Beschreibung

Die Erfindung betrifft ein optisches Kabel nach dem Oberbegriff des Anspruchs 1. Optische Kabel enthalten die optischen Adern in Form von Hohl- oder Festadern. Die einzelnen Adern werden zu größeren Verbänden zusammengefaßt, welche als Verseilelemente dienen.

Aus dem Europäischen Patent 76 637 ist es bekannt, optische Adern in Kanäle eines Profilkörpers lose einzulegen. Die optischen Adern haben auf diese Weise eine hohe Beweglichkeit in den Nuten; jedoch ist auf diese Weise die Anzahl der Adern, die in einem Kabel untergebracht werden kann, begrenzt. Außerdem ist die Möglichkeit, eine bestimmte Ader wieder aufzufinden, nur aufgrund besonderer Kennzeichnung der Adern möglich.

Aus der Europäischen Anmeldung 165 632 ist ein optisches Kabel bekannt, welches im Innern eine große Zahl von optischen Fasern enthält, welche in der Form von übereinander gestapelten optischen Bändern aufgebaut ist. Durch die feste Anordnung der optischen Fasern ist ein Wiederauffinden und Identifizieren leicht möglich. Es ist jedoch nur begrenzt möglich, diese Anordnung zu biegen, obwohl die Anordnung um die Längsachse verdrallt ist. Durch die Verbindung der einzelnen Bänder mittels eines Lackes ist die Beweglichkeit der einzelnen Bänder gegeneinander stark eingeschränkt.

Aus der gattungsgleichen US-PS 3,883,218 ist ein optisches Kabel bekannt, welches um ein zentrales Zugentlastungselement herumgewickelte optische Bänder aufweist. Diese Bänder füllen jedoch das Kabel nur ungenügend aus, da sie um einen relativ großen inneren Durchmesser herumgewickelt werden müssen, um nicht zu starken Krümmungen ausgesetzt zu sein.

Bekannt ist es auch bereits (US-A-4,695,128), bei einem Kabel der gattungsgemäßen Art zur weitgehend freien Bewegbarkeit der optischen Fasern diese in elliptisch oder rechteckförmig verformenden Röhren anzuordnen. Diese Form der schützenden Röhren verlängert den Weg der Fasern, den diese bei einer Biegung des Kabels nehmen können, wesentlich.

Auch hat man bereits (GB-A-2 181 090) optische Elemente, einzelne Fasern oder mehrere solcher Fasern in Bandform in Kammern extrudierter Trägerkörper untergebracht. Die Aufnahmekapazität an optischen Elementen ist naturgemäß beschränkt.

Der Erfindung liegt ausgehend vom genannten Stand der Technik daher die Aufgabe zugrunde, bei einem optischen Kabel der eingangs erwähnten Art, eine Anordnung der bandförmigen, optischen Elemente zu schaffen, welche die Aufnahme möglichst vieler optischer Fasern im Kabel ermöglicht. Außerdem sollen diese Fasern beim Spleißen leicht identifiziert werden können.

Diese Aufgabe wird bei einem optischen Kabel der eingangs erwähnten Art nach der Erfindung durch die im Kennzeichen des Anspruchs 1 erwähnten Merkmale gelöst. Ausführungsbeispiele der Erfindung werden nachstehend anhand der Zeichnung näher erläutert. Dabei zeigt:
- Fig. 1: ein Stück abgemanteltes Kabel in perspektivischer Darstellung;
- Fig. 2: verschiedene Ausführungen von Bandleitungen mit eingebetteten optischen Fasern;
- Fig. 3: eine besonders zugfeste Ausführungsform eines Kabels und
- Fig. 4: eine besonders platzsparende Ausführungsform eines Kabels.

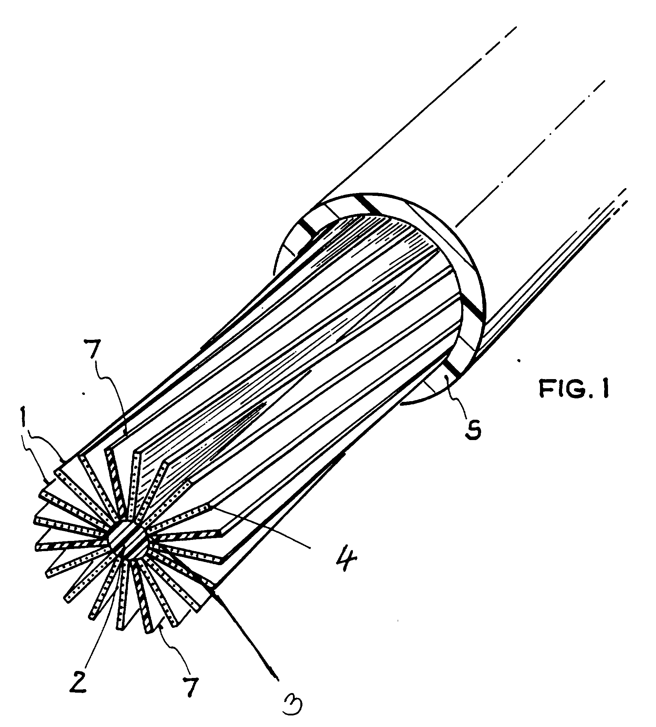

Ein optisches Kabel enthält im allgemeinen mehrere Kabelelemente, welche vorzugsweise um einen zugfesten Kern herum verseilt sind. Solche Verseilelemente enthalten unterhalb des Außenmantels 5 (siehe Fig. 1) optische Fasern in der Form bandförmiger optischer Elemente 1, sogenannten Bandleitungen, welche nach der Erfindung jeweils mit einer Kante 3 von der Oberfläche eines Zentralelementes 2 radial nach außen abstehend angeordnet sind. Die zweite Kante 4 befindet sich dann jeweils in der Nähe des Außenmantels 5. Diese bandförmigen Elemente 1 sind in einer einfachen Ausführungsform mit konstantem Schlag um das Zentralelement 2 verseilt; d. h. die Bänder sind wendelförmig um das Zentralelement 2 herum angeordnet.

Zwischen den optischen Elementen 1 können zur Verstärkung Stützelemente 7 vorgesehen sein. Die Lücken zwischen den einzelnen bandförmigen Elementen sind mit Quellpulver oder Petrolat gefüllt. Im allgemeinen sind die Kanten 3 der Bänder 1 und/oder 7 mit dem Zentralelement 2 fest verbunden. Zur besseren Verbindung wird die Kante 3 mit dem Zentralelement 2, und die Kante 4 mit dem Mantel 5 verklebt. Andererseits kann die Kante 3 in Nuten des Zentralelements angeordnet sein.

Das Stützelement 7 ist vorzugsweise aus Glasfilamenten aufgebaut, welche als Zugentlastungselemente vorgesehen sind. Die Stützelemente 7 können auch keilförmig ausgebildet sein, um die Hohlräume im Kabelelement zu verringern. Um den Kraftschluß zwischen Mantel 5 und Kern 2 herzustellen, sind die Kanten der Stützelemente 7 mit dem Mantel und dem Kern verklebt.

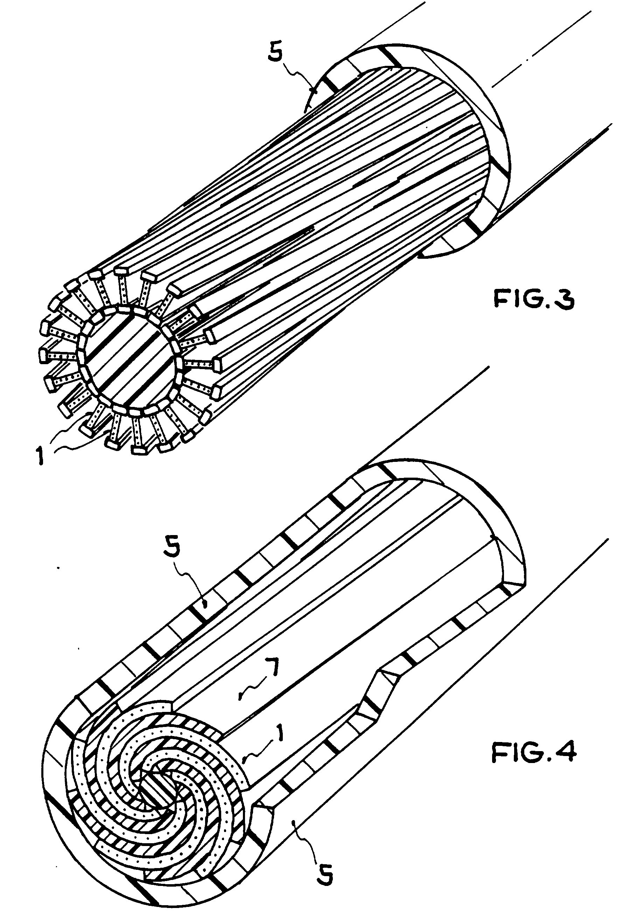

In der Ausführung nach Fig. 3 ist vorgesehen, daß die bandförmigen Elemente einen Doppel-T-Querschnitt aufweisen. Bei dieser Konstruktion ist die Scherfestigkeit der Bänder von Bedeutung; denn nur dadurch können Zugkräfte vom Mantel 5 auf das Zentralelement 2 übertragen werden.

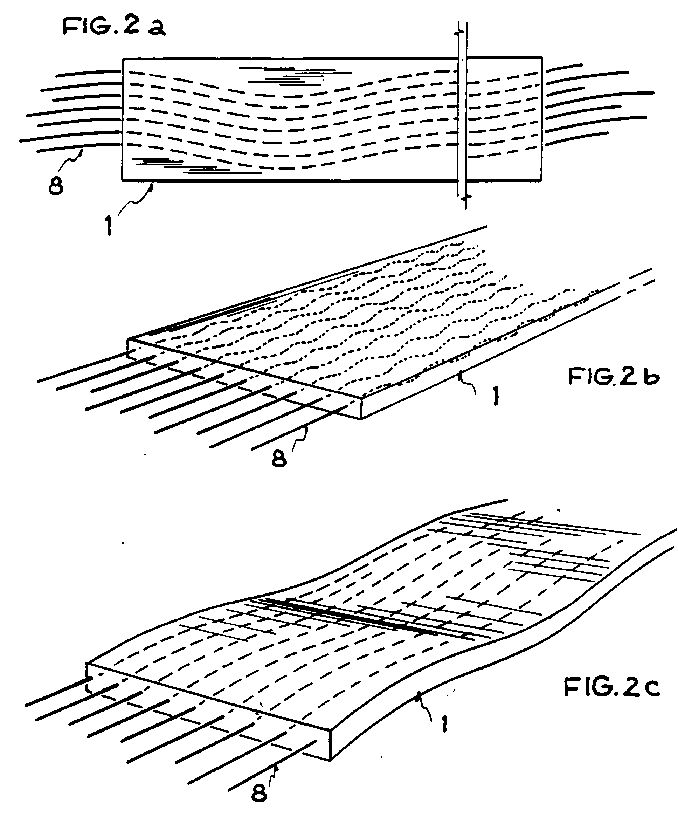

In Fig. 2a ist ein Band dargestellt, bei dem die Lichtwellenleiter 8 in der Bandebene mit Überlänge eingebettet sind. Die einzelnen Lichtwellenleiter sind dabei in Form einer Sinuskurve angeordnet. In Fig. 2b sind die Lichtwellenleiter senkrecht zur Bandebene mit Überlänge angeordnet. Bei Fig. 2c ist das ganze Band leicht gewellt. Die Lichtwellenleiter 8 sind parallel zu den Begrenzungsflächen des Bandes 1 angeordnet.

Es können alle bekannten Formen von optischen Bandleitungen für die optischen Bänder 1 eingesetzt werden. Vorzugsweise sind dies durch eine Kunststoffumhüllung verklebte parallel angeordnete optische Adern. Die optischen Adern sind durch mehrfache Beschichtung von Lichtwellenleitern oder optischen Fasern mit Kunststoff hergestellt.

In einer weiteren bevorzugten Ausführungsform der Erfindung sind die nach außen sich keilförmig erweiternden Hohlräume dadurch beseitigt, daß die optischen Elemente 1 und die Stützelemente 7, welche zunächst radial von der Oberfläche des Kerns 2 nach außen weisen, mit wachsendem Radius zunehmend gekrümmt sind. Infolge dieser Krümmung bilden diese optischen Elemente mit dem Radius einen sich nach außen vergrößernden Winkel α. Es gilt cos α = r₀/r. Ein Bespiel für ein solches Kabelelement ist in Fig. 4 dargestellt. Infolge der Elastizität der optischen Elemente und der Stützelemente ist es möglich, ihnen zusätzlich einen Schraubensinn um die Achse des Kabelelements zu erteilen: sie sind um den Kern 2 verseilt. Die Schlaglängen liegen vorzugsweise zwischen 25 und 40 cm.

Das aus den Kabelelementen hergestellte optische Kabel ist im übrigen nach herkömmlichen Methoden aufgebaut. Der zentrale Kern des Kabels kann auch durch ein Kabelelement gebildet werden. Um dieses Kabelelement sind sechs weitere Kabelelemente verseilt. Der weitere Aufbau des Kabels kann mehrlagig oder in Bündelform in der üblichen Weise erfolgen.

## Patentansprüche

1. Optisches Kabel mit einem Kabelelement, welches ein Zentralelement (2) und optische Aderelemente (1) mit länglichem Querschnitt sowie einen Außenmantel (5) aufweist, wobei die optischen Aderelemente um das Zentralelement verseilt sind und jeweils mit einer ersten Schmalseite (3) auf der Oberfläche des Zentralelements (2) radial nach außen stehend angeordnet sind, so daß die zweite Schmalseite (4) jeweils in der Nähe des Außenmantels (5) verläuft, dadurch gekennzeichnet, daß die optischen Elemente Bandleitungen (1) mit parallel verlaufenden optischen Fasern sind, die durch eine Umhüllung miteinander verbunden und dadurch in ihrer Lage fixiert sind.

2. Kabel nach Anspruch 1, dadurch gekennzeichnet, daß zwischen den Bandleitungen (1) bandförmige Stützelemente (7) vorgesehen sind, welche mit den Elementen (1) um das Zentralelement (2) verseilt sind.

3. Kabel nach Anspruch 2, dadurch gekennzeichnet, daß die bandförmigen Stützelemente (7) und die Bandleitungen (1) mit konstantem Schlag um das Zentralelement (2) verseilt sind.

4. Kabel nach Anspruch 2, dadurch gekennzeichnet, daß die Stützelemente (7) und die Bandleitungen (1) mit wechselndem Schlag um das Zentralelement (2) verseilt sind.

5. Kabel nach einem der Ansprüche 1 bis 4, dadurch gekennzeichnet, daß die erste Schmalseite (3) der Bandleitungen (1) mit dem Zentralelement (2) fest verbunden ist.

6. Kabel nach einem der Ansprüche 1 bis 4, dadurch gekennzeichnet, daß die erste Schmalseite (3) in Nuten (6) des Zentralelements (2) angeordnet ist.

7. Kabel nach einem der Ansprüche 2 bis 6, dadurch gekennzeichnet, daß die Stützelemente (7) aus Glasfilamenten aufgebaut und als Zugentlastungselemente vorgesehen sind.

8. Kabel nach einem der Ansprüche 2 bis 7, dadurch gekennzeichnet, daß die Zwischenräume zwischen den Bandleitungen (1) und den einzelnen Stützelementen (7) eine Füllmasse enthalten.

9. Kabel nach einem der Ansprüche 2 bis 8, dadurch gekennzeichnet, daß die Stützelemente (7) keilförmig ausgebildet sind.

10. Kabel nach einem der Ansprüche 2 bis 9, dadurch gekennzeichnet, daß die Bandleitungen (1) und die Stützelemente (7) von einer radialen Richtungsverteilung an der ersten Schmalseite (3) in eine tangentiale Richtungsverteilung in der Nähe der zweiten Schmalseite (4) übergehen.

11. Kabel nach Anspruch 1 oder einem der folgenden, dadurch gekennzeichnet, daß um das Kabelelement als zentralen Kern weitere Kabelelemente angeordnet sind.

## Claims

1. Optical cable having a cable element which has a central element (2) and optical wire elements (1) having an elongated cross-section and an outer sheath (5), the optical wire elements being stranded around the central element and being arranged in each case standing radially outwards with a first narrow side (3) on the surface of the central element (2), so that the second narrow side (4) runs in each case in the vicinity of the outer sheath (5), characterized in that the optical elements are ribbon cables (1) with optical fibres running parallel which are connected to one another by means of a sleeving and are fixed thereby in their position.

2. Cable according to Claim 1, characterized in that ribbon-like supporting elements (7) are provided between the ribbon cables (1), and are stranded with the elements (1) around the central element (2).

3. Cable according to Claim 2, characterized in that the ribbon-like supporting elements (7) and the ribbon cables (1) are stranded with a constant lay around the central element (2).

4. Cable according to Claim 2, characterized in that the supporting elements (7) and the ribbon cables (1) are stranded with alternating lay around the central element (2).

5. Cable according to one of Claims 1 to 4, characterized in that the first narrow side (3) of the ribbon cables (1) is firmly connected to the central element (2).

6. Cable according to one of Claims 1 to 4, characterized in that the first narrow side (3) is arranged in grooves (6) of the central element (2).

7. Cable according to one of Claims 2 to 6, characterized in that the supporting elements (7) are constructed from glass filaments and are provided as strain-relief elements.

8. Cable according to one of Claims 2 to 7, characterized in that the interspaces between the ribbon cables (1) and the individual supporting elements (7) contain a filling compound.

9. Cable according to one of Claims 2 to 8, characterized in that the supporting elements (7) are of wedge-shaped design.

10. Cable according to one of Claims 2 to 9, characterized in that the ribbon cables (1) and the supporting elements (7) change from a radial directional distribution at the first narrow side (3) into a tangential directional distribution in the vicinity of the second narrow side (4).

11. Cable according to Claim 1 or one of the following, characterized in that further cable elements are arranged around the cable element as central core.

## Revendications

1. Câble optique avec un élément de câble qui présente un élément central (2) et des éléments (1) de conducteurs optiques de section longitudinale ainsi qu'une gaine extérieure (5), les éléments de conducteurs optiques étant commis autour de l'élément central et chacun étant, par un premier petit côté (3), disposé, se tenant orienté radialement vers l'extérieur, sur la surface de l'élément central (2), de sorte que le second petit côté (4) se trouve chaque fois au voisinage de la gaine extérieure (5), caractérisé par le fait que les éléments optiques sont des lignes en ruban (1) avec des fibres optiques qui sont orientées parallèlement et sont reliées les unes aux autres par un enrobage et sont, de ce fait, fixées à leur position.

2. Câble selon la revendication 1, caractérisé par le fait qu'entre les lignes en ruban (1) sont prévus des éléments d'appui (7) en forme de ruban qui sont commis avec les éléments (1) autour de l'élément central (2).

3. Câble selon la revendication 2, caractérisé par le fait que les éléments d'appui (7) en forme de ruban et les lignes en ruban (1) sont commis autour de l'élément central (2) à pas constant.

4. Câble selon la revendication 2, caractérisé par le fait que les éléments d'appui (7) et les lignes en ruban (1) sont commis autour de l'élément central (2) à pas variable.

5. Câble selon l'une des revendications 1 à 4, caractérisé par le fait que le premier petit côté (3) des lignes en ruban (1) est solidarisé avec l'élément central (2)

6. Câble selon l'une des revendications 1 à 4, caractérisé par le fait que le premier petit côté (3) est disposé dans des rainures (6) de l'élément central (2).

7. Câble selon l'une des revendications 2 à 6, caractérisé par le fait que les éléments d'appui (7) sont constitués de filaments de verre et sont prévus en tant qu'éléments de décharge de la traction.

8. Câble selon l'une des revendications 2 à 7, caractérisé par le fait que les espaces intermédiaires entre les lignes en ruban (1) et les différents éléments d'appui (7) contiennent une masse de remplissage.

9. Câble selon l'une des revendications 2 à 8, caractérisé par le fait que les éléments d'appui (7) ont la forme de coin.

10. Câble selon l'une des revendications 2 à 9, caractérisé par le fait que les lignes en ruban (1) et les éléments d'appui (7) passent, d'une répartition à orientation radiale sur le premier petit côté (3), à une répartition à orientation tangentielle au voisinage du second petit côté (4).

11. Câble selon la revendication 1 ou l'une des suivantes, caractérisé par le fait qu'autour de l'élément de câble servant de noyau central sont disposés d'autres éléments de câble.
